# EUROPÄISCHE PATENTSCHRIFT

(11) **EP 1 676 059 B1**
(45) Veröffentlichungstag und Bekanntmachung des Hinweises auf die Patenterteilung: **07.05.2008**
(21) Anmeldenummer: 04787049.8
(22) Anmeldetag: 29.09.2004
(51) Int. Cl.: F16H 57/04, F16H 3/54

(54) **PLANETENGETRIEBE**
PLANETARY GEAR
ENGRENAGE PLANETAIRE

(30) Priorität: 21.10.2003 DE 10348757; 21.10.2003 DE 10348755; 24.01.2004 DE 102004003684; 24.01.2004 DE 102004003685
(43) Veröffentlichungstag der Anmeldung: 05.07.2006
(73) Patentinhaber: ZF FRIEDRICHSHAFEN AG, 88038 Friedrichshafen (DE)
(72) Erfinder: ECKERT, Harald, 88074 Meckenbeuren (DE)
(86) Internationale Anmeldenummer: PCT/EP2004/010885
(87) Internationale Veröffentlichungsnummer: WO 2005/050066

(56) Entgegenhaltungen:
- DE-A- 19 917 673
- US-A- 2 896 479
- US-A- 4 489 626
- US-A- 4 573 373

## Beschreibung

Die vorliegende Erfindung betrifft ein Planetengetriebe, insbesondere für Werkzeugmaschinen, nach dem Oberbegriff des Anspruchs 1.

Derartige Planetengetriebe, die meist als ein- oder mehrstufige Planetengetriebe ausgebildet sind, werden hauptsächlich in Werkzeugmaschinenantrieben sowie in Dreh-, Fräs- und Bearbeitungszentren eingesetzt. Die schaltbaren Planetengetriebe vergrößern die Leistungsbandbreite der Hauptspindelmotoren, um die Flexibilität der Werkzeugmaschinen bei der Bearbeitung von unterschiedlichen Werkstoffen durch hohe Drehmomente oder hohe Drehzahlen zu vergrößern. Die beispielsweise zwei Übersetzungsstufen werden gebildet, indem einerseits die Antriebswelle, die mit einem Sonnenrad verbunden ist, mit einem Hohlrad und andererseits das Hohlrad mit dem Gehäuse gekoppelt werden kann. Ein Planetenträger ist mit der Abtriebswelle verbunden.

Aus der DE A 199 17 673 der Anmelderin ist ein derartiges zweistufiges Planetengetriebe bekannt, mit einer Antriebswelle und mit einer Abtriebswelle, die in einem Gehäuse über Wälzlager gelagert sind. Die Antriebswelle ist mit einem Sonnenrad verbunden, das mit Planetenrädern in Eingriff steht, die auf Planetenbolzen in einem Planetenträger gelagert sind, welcher über eine Formschlussverbindung mit der Abtriebswelle verbunden ist. Die Planetenräder kämmen mit einem Hohlrad, das über ein Wälzlager im Gehäuse oder im Planetenträger drehbar gelagert ist und formschlüssig mit einer Nabe verbunden ist. Die Nabe ist über eine äußere Verzahnung mit einem ersten Teil der Schiebemuffe drehfest verbunden. Auf der Schiebemuffe befindet sich ein Wälzlager. Ferner ist ein äußeres Teil im Gehäuse axial verschiebbar auf einem Lagerbolzen geführt, wobei die axiale Verschiebung vom äußeren Teil auf das Wälzlager übertragen wird.

Die Verschiebung der Schiebemuffe erfolgt hierbei mittels einer Schalteinrichtung, deren Stellglied ein Elektromagnet oder eine Schalteinheit mit Motor ist und dessen Anker triebmäßig mit der Schiebemuffe verbunden ist.

Ein derartiges Planetengetriebe weist eine Vielzahl von sich drehenden Bauteilen und entsprechende Lager auf, die mit einem geeigneten Öl zu schmieren sind. Die meisten der herkömmlichen Planetengetriebe für Werkzeugmaschinen verwenden eine Tauchschmierung, die jedoch noch den Nachteil aufweist, dass sie mit hohem Panschverlusten behaftet ist und dass die maximal mögliche Drehzahl des Hohlrades durch das Hohlradlager begrenzt ist, welches sich erwärmt, wobei jedoch die aufgenommene Erwärmung nicht mehr abgegeben werden kann. Eine Ölkühlung ist bei Tauchschmierung mit Umlaufschmierung möglich, verhindert aber nicht die Panschverluste.

Es wurden ferner Planetengetriebe mit Umlaufschmierung und Ölkühlung entwickelt. Auch hier treten noch hohe Panschverluste auf, wobei die angestrebten höheren Maximaldrehzahlen des Hohlrades nur bedingt möglich sind. Bei zu hohen Drehzahlen wird nämlich durch die Rotationskräfte das Öl vom Zentrum weg in Richtung Gehäuse geschleudert, wodurch im Zentrum des Getriebes bei Dauerbetrieb Ölmangel auftritt, der wiederum Passungsrost hervorruft.

Es wurde auch versucht, ein Planetengetriebe mit Ölnebelschmierung zu betreiben. Dies ist jedoch für Planetengetriebe ausgeschlossen, da bei hohen Drehzahlen der Ölnebel durch die starke Ventilationswirkung des Hohlrades nicht bis ins Zentrum, d. h. nicht bis zum Sonnenrad gelangen kann. Dadurch tritt Mangelschmierung am Axiallager und ebenfalls Passungsrost auf.

Aufgabe der vorliegenden Erfindung ist es, ein Planetengetriebe zu schaffen, das einen Schmierkreis aufweist, mit dem höhere Drehzahlen des Hohlrades als bisher bei gleichzeitig niedrigeren Temperaturen erzielbar sind und bei dem kein Passungsrost mehr auftritt.

Ausgehend von einem Planetengetriebe der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Die Erfindung geht also aus von einem Planetengetriebe, insbesondere für Werkzeugmaschinen, mit einer Antriebswelle, die mit einem Sonnenrad verbunden ist, mit einer Abtriebswelle, die mit einem Planetenträger verbunden ist und die über ein erstes äußeres Lager und über ein zweites inneres Lager im Getriebegehäuse gelagert ist, wobei die beiden Lager durch einen Kolbenring voneinander getrennt sind, mit einem Axiallager, mit einem Hohlrad, das über Hohlradlager im Getriebegehäuse drehbar angeordnet ist, mit einer axial verschiebbaren Schiebemuffe, die über ein Schiebemuffenlager gelagert ist, mit einer Ölpumpe und mit einem Schmierkreis im Getriebe.

Erfindungsgemäß ist vorgesehen, dass die Ölpumpe außerhalb des Getriebes angeordnet ist, dass das Gehäuse mit einem Öleinlass versehen ist, dass der Öleinlass über eine Ölleitung mit dem ersten äußeren Lager der Abtriebswelle in Verbindung steht, dass die Buchse zur Aufnahme des Kolbenringes mit einer kleinen Bohrung versehen ist, dass das erste äußere Lager über einen Ölzufuhrkreis mit dem Axiallager in Verbindung steht, dass das Axiallager über einen Hohlraum mit dem Hohlradlager in Verbindung steht, wobei der Hohlraum durch einen Wandteil von einem im Getriebegehäuse vorgesehenen Ölablass abgekapselt ist und dass der Ölablass über eine Ölleitung mit der Pumpe verbunden ist.

Mit der erfindungsgemäßen Ausgestaltung des Schmierkreises werden höhere Drehzahlen des Hohlrades aufgrund niedrigerer Temperaturen ermöglicht, wobei zugleich Passungsrost in dem Planetengetriebe verhindert wird. Ferner ist es möglich, eine Trockensumpfschmierung zu realisieren, d. h. dass kein Ölstand im Planetengetriebe mehr erforderlich ist, wodurch auch keine Panschverluste und auch keine Temperaturerhöhung auftreten, im Gegensatz zu den herkömmlichen Planetengetrieben, die einen unterschiedlichen Ölstand aufweisen, der abhängig von der Drehrichtung ist und der sich nachteilig auf die Öltemperatur auswirkt.

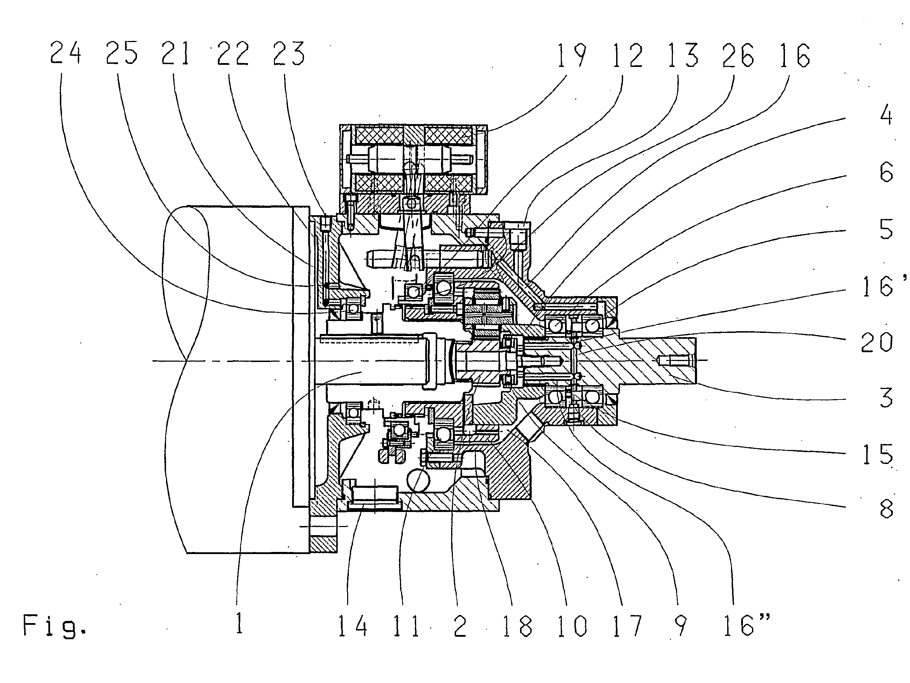

Im folgenden wird die Erfindung anhand der Zeichnung näher erläutert, wobei in der einigen Figur ein Schnitt durch ein zweistufiges Planetengetriebe, insbesondere für Werkzeugmaschinen, dargestellt ist, in dem der erfindungsgemäße Schmierkreis vorgesehen ist.

Da zweistufige Planetengetriebe für Werkzeugmaschinen dem Fachmann gut bekannt sind, werden im folgenden nur die für das Verständnis der Erfindung notwendigen Teile beschrieben.

Mit 1 ist die Antriebswelle des Planetengetriebes bezeichnet, mit 2 das mit ihr verbundene Sonnenrad, mit 3 die Abtriebswelle und mit 4 ein mit ihr verbundener Planetenträger. Mit 13 ist ein Öleinlass bezeichnet, der beim dargestellten Ausführungsbeispiel in der Nähe der Schalteinrichtung 19 für die Schiebemuffe 11 im Lager- oder Getriebegehäuse vorgesehen ist. Dieser Öleinlass ist mit einer außerhalb des Getriebes angeordneten nicht dargestellten Ölpumpe verbunden und über eine in der Wand des Getriebegehäuses ausgebildete Leitung 16 mit den ersten äußeren Lager 5 der Antriebswelle 3 verbunden. Das erste äußere Lager 5 ist vom zweiten inneren Lager 6 durch einen Kolbenring 8 abgeschottet, wobei der Kolbenring 8 mit einem Durchlass versehen ist. Dieser Durchlass kann entweder eine den Kolbenring durchsetzende parallel zur Achse der Antriebswelle ausgebildete kleine Bohrung 15 in der äußeren oder inneren Buchse sein oder aber ein schmaler Spalt zwischen dem Kolbenring 8 und der äußeren Buchse, sodass eine geringe Ölmenge dem zweiten inneren Lager 6 zugeführt wird.

Das erste äußere Lager 5 steht mit dem Axiallager 9 über zwei parallel zur Längsachse in der Abtriebswelle ausgebildete Ölleitungen 16', 16'' in Verbindung, die, um Unwuchten zu vermeiden, in einer durch die Längsachse der Abtriebswelle gehenden Symmetrieebene ausgebildet sind. Es können auch nur eine Ölleitung oder mehr als zwei Ölleitungen vorgesehen sein.

Diese beiden Ölleitungen 16', 16" stehen mit einer die Abtriebswelle senkrecht zur Längsachse durchsetzenden Bohrung 20 in Verbindung; durch diesen Ölzufuhrkreis fließt das Öl vom ersten äußeren Lager 6 zum Axiallager 9.

Das Öl fließt also zur Abtriebswellenmitte, von wo es nach dem Fluten des Axiallagers 9 durch die Rotationskräfte wieder in Richtung Gehäuseinnenwand gelangt. Durch das am Umfang durch ein Wandteil 18 verschlossene Lagergehäuse wird ein Hohlraum 17 gebildet, durch den das Öl zum Hohlradlager 11 fließt, welches hierdurch optimal geschmiert und zugleich gekühlt wird, wie es für eine Drehzahlanhebung entscheidend ist. Bei dem herkömmlichen Planetengetrieben wurde die Maximaldrehzahl des Getriebes durch die Drehzahl des Hohlradlagers begrenzt.

Das durch den Wandteil 18 geschlossene Lagergehäuse kapselt dabei das im Direktgang schnell drehende Hohlrad 11, wodurch ein Panschen des Hohlrades im Öl verhindert oder zumindest stark reduziert wird und ein drehrichtungsabhängiger Ölstand verhindert wird.

Das Hohlradlager 11 steht nicht mit dem Schiebemuffenlager 12 der Schiebemuffe 26 in Verbindung, da dieses Schiebemuffenlager, welches durch seine kleinere Baugröße nicht drehzahlkritisch ist und zudem keine Axial- und/oder Radialkräfte aufnehmen muss, durch einen Ölnebel geschmiert werden kann.

Sofern das Planetengetriebe mit einer Adapterplatte 21 zwischen der Antriebswelle und dem Getriebe versehen ist, so weist diese einen eigenen Öleinlass 23 auf, an dem sich eine Ölleitung 22 anschließt zur Schmierung der zugehörigen Lager 24. Diese Ölleitung 22 ist mit einer Entlastungsbohrung 25 versehen für den Fall, dass durch zu hohe Ölumlaufmenge ein zu hoher Öldruck in der Leistung 22 auftritt.

Bei einem (nicht dargestellten) Ausführungsbeispiel ist anstelle des Öleinlasses 13 in der Nähe der Schalteinrichtung 19 eine zentrische Axialbohrung in der Abtriebswelle 3 vorgesehen, sodass das Öl durch diese zentrische Bohrung den Ölleitungen 16, 16' und 20 zugeführt wird. Als Zuführung kann auch der Öleinlass 13 dienen.

Es sei betont, dass auch ein Ölkreislauf in entgegengesetzter Richtung möglich ist, d. h. dass der oben beschriebene Ölablass 14 der Öleinlass ist und der oben beschriebene Öleinlass 13 der Ölablass ist.

Durch das kontinuierliche Durchströmen der Planetengetriebes wird neben einer hervorragenden Schmierung mit gleichzeitiger Kühlung des Öles auch Passungsrost im Getriebe verhindert.

Die erfindungsgemäße Trockensumpfschmierung verhindert also einen Ölstand samt Panschen und die bisher übliche Temperaturerhöhung. Die gezielte Schmierung der einzelnen Bauteile führt gleichzeitig zu einer erheblichen Drehzahlanhebung des Hohlrades bei reduziertem Passungsrost. Die Kapselung durch das Wandteil 18 trägt erheblich zu diesen Vorteilen bei.

### Bezugszeichen

- 1: Antriebswelle
- 2: Sonnenrad
- 3: Abtriebswelle
- 4: Planetenträger
- 5: äußeres Lager
- 6: inneres Lager
- 7: Gehäuse
- 8: Kolbenring
- 9: Axiallager
- 10: Hohlrad
- 11: Hohlradlager
- 12: Schiebemuffenlager
- 13: Öleinlass
- 13': Öleinlass
- 14: Ölablass
- 15: Bohrung
- 16: Ölleitung
- 16': Ölleitung
- 16": Ölleitung
- 17: Hohlraum
- 18: Wandteil
- 19: Schalteinrichtung
- 20: Ölleitung
- 21: Adapterplatte
- 22: Ölleitung
- 23: Öleinlass
- 24: Lager
- 25: Entlastungsbohrung
- 26: Schiebemuffe

## Patentansprüche

1. Planetengetriebe, insbesondere für Werkzeugmaschinen, mit einer Antriebswelle, die mit einem Sonnenrad verbunden ist, mit einer Abtriebswelle (3), die mit einem Planetenträger verbunden ist und die über ein erstes äußeres Lager (5) und ein zweites inneres Lager (6) im Getriebegehäuse gelagert ist, wobei die beiden Lager durch einen Kolbenring (8) voneinander getrennt sind, mit einem Axiallager (9), mit einem Hohlrad (10), das über ein Hohlradlager (11) im Getriebegehäuse drehbar angeordnet ist, mit einer axial verschiebbaren Schiebemuffe (26) und mit einem Schmierkreis im Getriebe, **dadurch gekennzeichnet, dass** das Gehäuse mit einem Öleinlass (13) versehen ist, der mit einer außerhalb des Getriebes angeordneten Ölpumpe in Verbindung steht, dass der Öleinlass über eine Ölleitung (16) mit dem ersten äußeren Lager (5) der Abtriebswelle (3) in Verbindung steht, dass zwischen dem ersten äußeren Lager (5) und dem zweiten inneren Lager (6) ein Kolbenring (8) eingesetzt ist, der mit einem Durchlass für das Öl versehen ist, dass das erste äußere Lager (5) über einen Ölzufuhrkreis mit dem Axiallager (9) in Verbindung steht und dass das Axiallager (9) über einen Hohlraum (17) mit dem Hohlradlager (11) in Verbindung steht, wobei der Hohlraum (17) durch ein Wandteil (18) von einem im Getriebegehäuse vorgesehenen Ölablass (14) abgekapselt ist.

2. Planetengetriebe nach Anspruch 1, **dadurch gekennzeichnet, dass** der Ölzufuhrkreis zwischen dem ersten äußeren Lager (5) und dem Axiallager (9) aus einer, zwei oder mehreren Ölleitungen (16', 16") besteht, die in einer Symmetrieebene durch die Längsachse der Abtriebswelle (3) parallel zu dieser verlaufen, sowie aus einer dieser Ölleitungen miteinander verbindenden senkrecht zur Längsachse der Abtriebswelle (3) verlaufenden und sie durchsetzenden Ölleitung (20).

3. Planetengetriebe nach einem der vorhergehenden Ansprüche, **dadurch gekennzeichnet, dass** der Öleinlass (13) im Lager- oder Getriebegehäuse vorgesehen ist.

4. Planetengetriebe nach einem der vorhergehenden Ansprüche, **dadurch gekennzeichnet, dass** der Öleinlass als zentrische Bohrung in der Abtriebswelle (3) ausgebildet ist.

5. Planetengetriebe nach einem der vorhergehenden Ansprüche, **dadurch gekennzeichnet, dass** der Durchlass des Kolbenringes (8) eine den Ring (8) durchsetzende parallel zur Achse der Abtriebswelle (3) ausgebildete kleine Bohrung (15) in der äußeren oder inneren Buchse ist.

6. Planetengetriebe nach einem der vorhergehenden Ansprüche, **dadurch gekennzeichnet, dass** der Durchlass des Kolbenringes (8) ein schmaler Spalt zwischen dem Kolbenring (8) und der äußeren Buchse ist.

7. Planetengetriebe nach einem der vorhergehenden Ansprüche, **dadurch gekennzeichnet, dass** im Fall einer zwischen der Antriebswelle und dem Planetengetriebe eingesetzten Adapterplatte (21) diese mit einem eigenen Öleinlass (23) und mit einer eigenen Ölleitung (22) versehen ist, die über eine Entlastungsbohrung (25) mit dem Inneren des Getriebes in Verbindung steht.

8. Planetengetriebe nach einem der vorhergehenden Ansprüche, **dadurch gekennzeichnet, dass** der Öleinlass der Ölablass ist und dass der Ölablass der Öleinlass ist.

## Claims

1. Planetary transmission, in particular one for machine tools, with an input shaft linked to a sun gear, with an output shaft (3) linked to a planet carrier and supported in the transmission housing by a first external bearing (5) and a second internal bearing (6), with the two bearings being separated by a piston ring (8), with an axial bearing (9), with an internal gear (10) rotatably arranged in the transmission housing by means of an internal gear bearing (11), with an axially displaceable sliding sleeve (26), and with a lubricating circuit in the transmission, **characterized in that** the housing has an oil inlet (13) connected to an oil pump arranged outside the transmission, that the oil inlet is connected via an oil line (16) to the first external bearing (5) of the output shaft (3), that a piston ring (8) is inserted between the first external bearing (5) and the second internal bearing (6), with this ring being provided with an oil passage, that the first external bearing (5) is connected to the axial bearing (9) via an oil supply circuit, and that the axial bearing (9) is connected to the internal ring bearing (11) via a hollow space (17), with the hollow space (17) being separated by a partition (18) from an oil outlet (14) provided in the transmission housing.

2. Planetary transmission acc. to claim 1, **characterized in that** the oil supply circuit between the first external bearing (5) and the axial bearing (9) consists of one, two or several oil lines (16', 16") running parallel to and in one plane of symmetry through the longitudinal axis of the output shaft (3), and of an oil line (20) linking these oil lines and being arranged in and vertically to the longitudinal axis of the output shaft (3).

3. Planetary transmission acc. to one of the preceding claims, **characterized in that** the oil inlet (13) is provided in the bearing or the transmission housing.

4. Planetary transmission according to one of the preceding claims, **characterized in that** the oil inlet is designed as central bore in the output shaft (3).

5. Planetary transmission according to one of the preceding claims, **characterized in that** the passage of the piston ring (8) is a small bore (15) in the outer or inner bush penetrating the ring (8) and running parallel to the axis of the output shaft (3).

6. Planetary transmission according to one of the preceding claims, **characterized in that** the passage of the piston ring (8) is a narrow gap between the piston ring (8) and the outer bush.

7. Planetary transmission acc. to one of the preceding claims, **characterized in that** if an adapter plate (21) is used between the input shaft and the planetary transmission, it is provided with a separate oil inlet (23) and a separate oil line (22) linked to the interior of the transmission via a relief bore (25).

8. Planetary transmission acc. to one of the preceding claims, **characterized in that** the oil inlet is the oil outlet and that the oil outlet is the oil inlet.

## Revendications

1. Boîte planétaire, en particulier pour machines-outils, dotée d'un arbre d'entrée, celui-ci étant lié à un planétaire, dotée d'un arbre de sortie (3), celui-ci étant lié à un arbre porte-satellites et étant logé à l'aide d'un premier roulement extérieur (5) et un deuxième roulement intérieur (6) dans le carter de la boîte de vitesses, sachant que les deux roulements sont séparés l'un par rapport à l'autre par un segment de piston (8), dotée d'une butée (9), et dotée d'une couronne (10), celle-ci étant logée à rotation par l'intermédiaire d'un roulement de couronne (11) dans le carter de la boîte de vitesses, et dotée d'un coulisseau (26) deplaçable axialement et dotée d'un circuit de lubrification dans la boîte de vitesses, **caractérisée en ce que** le carter est doté d'un orifice d'admission d'huile (13), celui-ci étant lié à une pompe à huile disposée à l'extérieur de la boîte de vitesses, **en ce que** l'orifice d'admission d'huile est lié par l'intermédiaire d'un conduit d'huile (16) au premier roulement extérieur (5) de l'arbre de sortie (3), **en ce que** entre le premier roulement extérieur (5) et le deuxième roulement intérieur (6) est monté un segment de piston (8), celui-ci étant doté d'un orifice de passage de l'huile, **en ce que** le premier roulement extérieur (5) est lié par l'intermédiaire d'un circuit d'amenée d'huile à la butée (9) et **en ce que** la butée (9) est liée par l'intermédiaire d'une cavité (17) au porte-couronne (11), sachant que la cavité (17) est isolée par l'intermédiaire d'une paroi (18) par rapport à un orifice de vidange d'huile prévu dans le carter de la boîte de vitesses (14).

2. Boîte planétaire selon la revendication 1, **caractérisée en ce que** le circuit d'amenée d'huile entre le premier roulement extérieur (5) et la butée (9) est composé d'un, de deux ou de plusieurs conduites d'huile (16', 16"), celle-ci étant disposées dans un plan de symétrie traversant l'axe longitudinal de l'arbre de sortie (3) parallèlement par rapport à celui-ci, ainsi que d'une conduite d'huile (20) reliant ces conduites d'huile l'une par rapport à l'autre et disposée verticalement par rapport à l'axe longitudinal de l'arbre de sortie (3) et la traversant.

3. Boîte planétaire selon une des revendication précédentes, **caractérisée en ce que** l'orifice d'amenée d'huile (13) est prévu dans le logement du palier ou dans le carter de la boîte de vitesses.

4. Boîte planétaire selon une des revendications précédentes, **caractérisée en ce que** l'orifice d'amenée d'huile est réalisé comme alésage centré dans l'arbre de sortie (3).

5. Boîte planétaire selon une des revendications précédentes, **caractérisée en ce que** l'orifice de passage du segment de piston (8) est un petit alésage (15) dans la douille intérieure ou extérieure traversant la bague (8) et étant disposé parallèlement par rapport à l'axe de l'arbre de sortie (3).

6. 5. Boîte planétaire selon une des revendications précédentes, **caractérisée en ce que** l'orifice de passage du segment de piston (8) est une fente étroite entre le segment de piston (8) et la douille extérieure.

7. Boîte planétaire selon une des revendications précédentes, caratérisée en ce que en cas de montage d'une plaque d'adaptation (21) interposée entre l'arbre de sortie et la boîte planétaire, la dite plaque d'adaptation est dotée d'un orifice d'amenée d'huile (23) et d'une conduite d'huile (22) dédiés, celle-ci étant liée à l'intérieur de la boîte de vitesses par l'intermédiaire d'un trou de déversement (25).

8. Boîte planétaire selon une des revendications précédentes, **caractérisée en ce que** l'orifice d'amenée d'huile est l'orifice de vidange d'huile et **en ce que** l'orifice de vidange d'huile est l'orifice d'amenée d'huile.
